Europäisches Patentamt

(19) European Patent Office

Office européen des brevets

(11) Numéro de publication : **0 307 321 B1**

(12) **FASCICULE DE BREVET EUROPEEN**

(45) Date de publication du fascicule du brevet :
28.08.91 Bulletin 91/35

(51) Int. Cl.⁵ : **G01C 19/56**

(21) Numéro de dépôt : 88402285.6

(22) Date de dépôt : 09.09.88

(54) **Dispositif gyrométrique piézoélectrique.**

(30) Priorité : 11.09.87 FR 8712624

(43) Date de publication de la demande :
15.03.89 Bulletin 89/11

(45) Mention de la délivrance du brevet :
28.08.91 Bulletin 91/35

(84) Etats contractants désignés :
CH DE GB LI

(56) Documents cités :
GB-A- 2 111 209
US-A- 3 520 195

(73) Titulaire : SOCIETE D'APPLICATIONS
GENERALES D'ELECTRICITE ET DE
MECANIQUE SAGEM
6, Avenue d'Iéna
F-75783 Paris Cédex 16 (FR)

(72) Inventeur : Adam, Christian
18, Rue Octave Dubois
F-95150 Taverny (FR)
Inventeur : Raoult, Jean
25, Rue Pasteur
F-95100 Argenteuil (FR)
Inventeur : Rochereau, Jacques
28, Rue Vigneronde
F-95100 Argenteuil (FR)

(74) Mandataire : Fort, Jacques
CABINET PLASSERAUD 84, rue d'Amsterdam
F-75009 Paris (FR)

EP 0 307 321 B1

Jouve, 18, rue Saint-Denis, 75001 PARIS

## Description

La présente invention concerne les dispositifs gyrométriques, c'est-à-dire destinés à mesurer une vitesse de rotation.

Le besoin se fait sentir d'un dispositif gyrométrique à organe détecteur lié à la structure dont la vitesse de rotation est à mesurer (c'est-à-dire du type couramment dénommé "strap-down"), ayant un encombrement faible, réalisable en série à bas prix, capable de fournir des mesures significatives dans une plage de vitesse très élevée (habituellement de quelques degrés par seconde à quelques milliers de degrés par seconde) et pouvant supporter des accélérations linéaires et angulaires très élevées. Parmi les domaines d'application de tels dispositifs, on peut notamment citer les engins et obus guidés ou autoguidés dans lesquels le dispositif gyrométrique est utilisé une seule fois.

Pour répondre à ce besoin on a déjà proposé un dispositif gyrométrique conforme au préambule de la revendication 1.

Le fonctionnement de ce dispositif est le suivant. Le champ électrique créé par les électrodes d'excitation, alimentées à la fréquence de résonance de la plaque, fait vibrer cette dernière par effet piézo-électrique direct en faisant apparaître un champ de vibration $U_M$. Si la plaque est soumise à une rotation de vitesse angulaire $\Omega$ autour de l'axe, des forces de Coriolis apparaissent et créent un second champ de vibration $U_C$ de la structure qui se superpose au champ moteur $U_M$. Des électrodes de détection, placées de façon à n'être sensibles qu'au champ de Coriolis $U_C$, fournissent un signal proportionnel à la vitesse de rotation $\Omega$ et à l'amplitude du champ moteur $U_M$, qu'on rend constante à l'aide d'un circuit d'asservissement.

Le document GB 2154739 décrit un dispositif de ce type, ainsi que d'autres dispositifs dans lesquels la plaque est remplacée par un tube. Dans tous les cas, la structure vibrante est de révolution autour de l'axe sensible et se déforme en ellipse lors de sa vibration.

Dans cette disposition suivant l'art antérieur l'organe détecteur n'est orienté que par la présence des électrodes, de sorte que toute erreur sur le positionnement de ces dernières, dues notamment aux tolérances de fabrication, se traduit par un décalage angulaire du champ vibrant.

Lorsque le champ moteur $U_M$ correspond à un champ vibrant "elliptique" (c'est-à-dire que tout cercle se déforme selon une ellipse), alors le champ de Coriolis correspond au même mode elliptique, mais décalé angulairement de 45°. Le champ $U_M$ elliptique est obtenu usuellement par deux électrodes diamétralement opposées, excitées en phase. Cette excitation correspond à une excitation que l'on peut qualifier de "symétrique-symétrique" dans la mesure où elle respecte la symétrie selon le diamètre sur lequel sont situées ces électrodes et également la symétrie selon un diamètre perpendiculaire à ce dernier.

On connaît également (US-A-3520195) un dispositif gyrométrique dont l'élément sensible est une poutre en matériau non piézo-électrique, excitée par des éléments piézo-électriques longitudinaux. Ni les électrodes d'excitation, ni les électrodes de détection n'ont une symétrie d'ordre 4. C'est la longueur de la poutre, qu'on ne peut considérer comme une plaque, qui détermine la fréquence de résonance.

La présente invention vise à fournir un dispositif gyrométrique du type ci-dessus défini, répondant mieux que ceux antérieurement connus aux exigences de la pratique, notamment en ce qu'il présente une sensibilité accrue et en ce qu'il est moins sensible aux erreurs de positionnement des électrodes.

L'approche choisie dans ce but consiste à rompre l'axisymétrie de l'élément sensible en créant des directions privilégiées indépendamment du dessin des électrodes, afin de réduire la sensibilité aux erreurs de positionnement des électrodes. Elle implique de plus de décaler de 90° les champs $U_M$ et $U_C$ afin de minimiser les interactions réciproques. On écarte ainsi le mode elliptique classique de vibrations.

Dans ce but l'invention propose notamment un dispositif caractérisé en ce que, la plaque sensiblement plane n'étant pas circulaire, cette plaque et les électrodes ont une symétrie de révolution d'ordre 4.

En d'autres termes, la forme extérieure de la plaque et la disposition des électrodes sont telles que par rotation de l'ensemble de 90°, 180° ou 270° on retrouve le dessin initial. Souvent la plaque sera en forme de carré, éventuellement à coins tronqués et/ou à côtés légèrement courbes plutôt que rectilignes.

Cette troncature peut être à un point tel que l'on arrive à une plaque de forme polygonale n'ayant plus 4 côtés mais 4n côtés (n étant supérieur à 1). Cependant plus le nombre de côtés augmente et plus on se rapproche du cercle, perdant ainsi les avantages liés à la forme carrée qui constitue un optimum du point de vue du découplage des modes de vibration et se prête bien à une réalisation industrielle.

Grâce à cette disposition, la plaque présente des axes privilégiés et est donc orientée avant même mise en place des électrodes. En d'autres termes, la plaque canalise les modes d'oscillation selon deux directions préférentielles, qui seront désignées par X et Y, l'axe X portant les électrodes d'excitation du champ moteur $U_M$.

Dans un mode avantageux de réalisation de l'invention, les électrodes d'excitation sont alimentées de façon à exciter la vibration de la plaque de façon symétrique selon l'une des directions X, mais antisymétrique selon la direction perpendiculaire Y. De ce fait, le champ de Coriolis induit correspond à un champ de vibration $U_C$ décalé de 90° par rapport au champ moteur $U_M$. En conséquence, les erreurs de position des électrodes ont une incidence moins grande que dans le cas où l'angle entre les deux modes est de 45°.

L'invention sera mieux comprise à la lecture de la description qui suit d'un mode particulier de réalisation, donné à titre d'exemple non limitatif. La description se réfère aux dessins qui l'accompagnent, dans lesquels :

— la figure 1 montre une disposition possible d'électrodes d'excitation et de détection sur l'organe détecteur d'un dispositif ;

— la figure 2 montre une disposition de principe utilisable pour asservir l'excitation de façon à conserver un champ moteur constant à la fréquence de résonance de l'élément sensible ;

— la figure 3, similaire à la figure 2, montre une constitution réelle possible du circuit de la figure 2 ;

— les figures 4 et 5 montrent deux constitutions possibles du montage de mesure de la vitesse de rotation ;

— la figure 6 est un schéma en perspective avec arrachement partiel, montrant un mode de fixation de la plaque du détecteur dans son support;

— la figure 7 montre un autre mode de retenue de la plaque dans son support ;

— la figure 8 montre une variante du circuit de la figure 3 ;

— les figures 9 et 10 montrent d'autres modes encore de retenue de la plaque.

Le dispositif gyrométrique peut être considéré comme constitué d'un organe détecteur et d'un circuit d'excitation et de mesure qui seront successivement décrits.

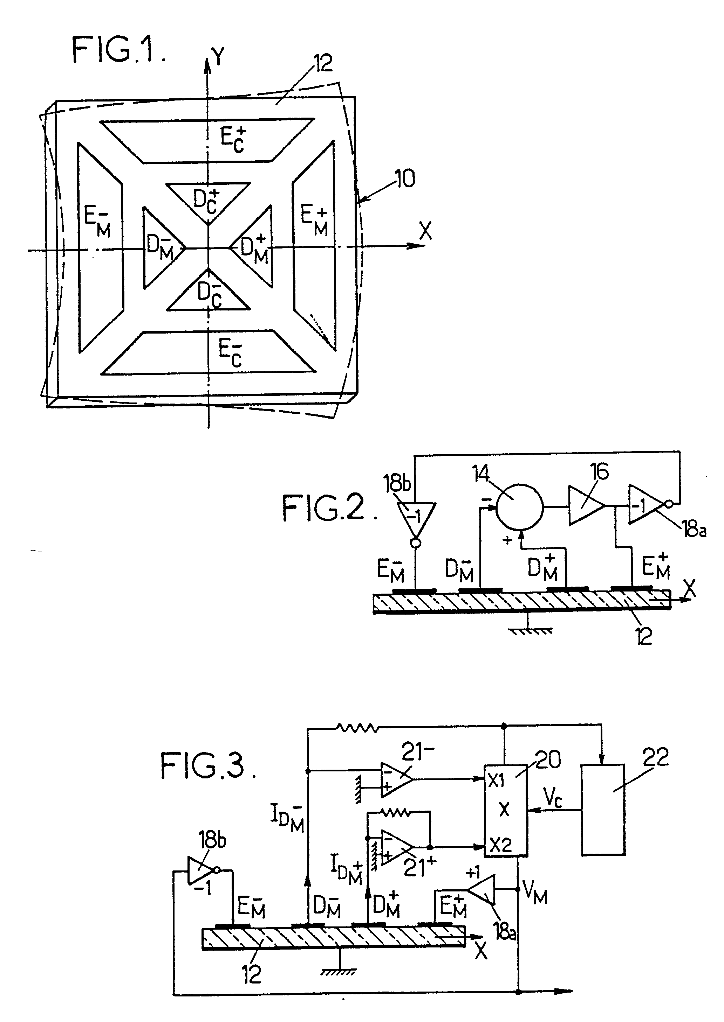

L'organe détecteur 10 peut avoir la constitution montrée schématiquement en figure 1. Il se compose d'une plaque mince 12 en matériau piézoélectrique (par exemple en niobate de lithium ou en zirconate-titanate de plomb) polarisée perpendiculairement à ses grandes faces et liée à la structure dont la vitesse de rotation est à mesurer, par des moyens dont des exemples seront donnés plus loin.

Cette plaque est revêtue sur une grande face (celle située à l'arrière dans le cas de la figure 1) d'une couche mince de matériau conducteur porté à un potentiel constant, généralement à la masse. Cette couche mince peut être continue, comme indiqué sur la figure 2, ou fractionnée de façon à reproduire la géométrie des électrodes portées par l'autre face, pour assurer une symétrie mécanique et une symétrie des lignes de force du champ électrique, favorables à la réduction des modes parasites. La face avant, visible sur la figure 1, porte plusieurs jeux d'électrodes.

Ces électrodes sont soit des électrodes d'excitation (symbole E) soit des électrodes de détection (symbole D) se rapportant au champ moteur (indice M) ou au champ de Coriolis (indice C). Les électrodes suivies du signe − sont en opposition de phase par rapport à celles de même nom suivies du signe +.

Ainsi l'électrode $E_M-$ est l'électrode d'excitation du champ vibrant moteur en opposition de phase avec $E_M+$.

Dans le cas illustré en figure 1, la disposition choisie pour les électrodes d'excitation E vise à assurer une excitation symétrique selon un axe X perpendiculaire à l'un des côtés, mais antisymétrique selon l'axe perpendiculaire Y. Pour cela les deux électrodes motrices d'excitation $E_M-$ et $E_M+$ sont donc disposées le long de l'axe X, symétriquement par rapport à l'axe Y, et alimentées par des signaux en opposition de phase. Deux électrodes dites d'excitation $E_C+$ et $E_C-$ sont alignées le long de l'axe Y et symétriques par rapport à l'axe X en respectant la symétrie d'ordre 4. Selon le cas, elle peuvent avoir une des trois fonctions suivantes :

— créer une contre réaction sur le champ $U_C$ de Coriolis, d'où leur nom,

— être reliées à la masse (rôle passif) si on n'utilise pas la première fonction,

— enfin, augmenter le facteur d'échelle du dispositif en les mettant en parallèle avec les électrodes $D_C+$ et $D_C-$.

Chacune des électrodes représentées sur la figure 1 peut être fractionnée en plusieurs électrodes respectant les symétries décrites précédemment.

La plaque porte également deux jeux d'électrodes de détection. L'un des jeux est destiné à mesurer le champ moteur créé par les électrodes d'excitation. L'autre jeu est destiné à mesurer l'amplitude des contraintes induites par les forces de Coriolis et proportionnelles à la vitesse de rotation de la plaque autour d'un axe perpendiculaire à son plan qui constitue donc l'axe sensible du gyromètre.

L'emplacement choisi pour les électrodes découle du fait qu'une électrode de surface dS en un point de la surface de la plaque 12 donne une contribution en courant proportionnelle à :

$$(T_X + T_Y)dS$$

où $T_X$ et $T_Y$ sont les contraintes de traction ou de compression dans les directions X et Y dues au champ moteur $U_M$ et au champ de Coriolis $U_C$, dans la mesure où $T_Z$ est négligeable. Du fait de la symétrie suivant X et de l'antisymétrie suivant Y du champ moteur $U_M$ et du fait que les forces de Coriolis transforment une symétrie en antisymétrie et réciproquement, un jeu d'électrodes de détection possédant un axe de symétrie SE :

a) n'est sensible qu'à la vibration du champ moteur $U_M$ si l'axe de symétrie SE est un axe de symétrie du champ moteur $U_M$ (en particulier l'axe X) ;

b) n'est sensible qu'à la vibration du champ de Coriolis $U_C$ si son axe de symétrie SE est un axe d'antisymétrie du champ moteur $U_M$ (en particulier l'axe Y).

Cette analyse montre qu'il suffira donc de placer les électrodes $D_M+$ et $D_M-$ de détection du champ moteur symétriquement par rapport à l'axe Y et le long de l'axe X et les électrodes DC+ et DC- de détection du champ de Coriolis le long de l'axe Y et symétriquement par rapport à l'axe X. Ces électrodes sont représentées sous forme triangulaire sur la figure 1, mais on peut modifier aussi bien la forme de ces électrodes que leur dimension.

Généralement, on cherchera à maintenir le champ moteur $U_M$ à une amplitude constante de façon que l'amplitude du signal fourni par les électrodes DC+ et DC- donne une représentation directe de la vitesse X. Pour cela, il suffit de régler la tension appliquée aux électrodes d'excitation $E_M+$ et $E_M-$ de façon maintenir constant le courant fourni par les électrodes $D_M+$ et $D_M-$. Mais du fait de l'antisymétrie du champ moteur, le circuit d'asservissement implique une inversion de certains signaux. Dans son principe, ce circuit d'asservissement peut avoir la constitution montrée en figure 2. Les courants fournis par les électrodes $D_M+$ et $D_M-$ sont appliqués respectivement aux entrées additive et soustractive d'un sommateur 14. La sortie de ce sommateur attaque un circuit 16 de filtrage et d'amplification, de comparaison avec une valeur de consigne, et de fourniture d'une tension tendant à annuler l'écart entre la sortie du sommateur 14 et le signal de consigne. La tension de sortie est appliquée à l'électrode $E_M+$ par l'intermédiaire d'un amplificateur 18a de gain +1 et à la seconde électrode motrice d'excitation $E_M-$ par l'intermédiaire d'un amplificateur de gain -1.

L'ensemble du circuit d'excitation peut avoir la constitution réelle montrée en figure 3, où les organes déjà montrés sur les figures précédentes sont affectés du même numéro de référence. Le montage d'excitation est obtenu en bouclant en oscillateur les électrodes de détection de champ moteur $D_M+$ et $D_M-$ et les électrodes motrices d'excitation $E_M+$ et $E_M-$. Les signaux de courant, de forme sinusoïdale, fournis par les électrodes $D_M+$ et $D_M-$ sont appliqués à des amplificateurs courant-tension respectifs 21+ et 21-. Les tensions sinusoïdales de sortie des amplificateurs, proportionnelles aux vitesses créées par le champ moteur, sont appliquées sur les entrées différentielles X1 et X2 d'un multiplieur analogique 20. La troisième entrée du multiplieur 20 reçoit une tension continue élaborée par un montage de contrôle 22. Ce montage comporte un redresseur d'entrée et un circuit correcteur qui sera généralement du type à réponse proportionnelle-intégrale. On peut notamment adopter une fonction de transfert entre la tension continue de sortie Vc et l'amplitude $V_A$ de la tension d'entrée de la forme :

$$V_C = K(1 + (1/T_{IP})ù (V_A - V_O)$$

où P est l'opérateur de Laplace ; K est le coefficient d'action proportionnelle et $T_I$ est le coefficient d'action intégrale.

$V_A$ est l'amplitude de l'oscillation
$V_O$ est la consigne d'amplitude.

La tension de sortie $V_M$ du multiplieur est en conséquence de la forme :

$$V_M = k(X1 - X2)V_C$$

où k est un coefficient de proportionnalité.

La tension de sortie $V_M$ est appliquée sur l'électrode $E_M+$ par l'intermédiaire d'un amplificateur de gain fixe 18a et sur l'électrode $E_M-$ par l'intermédiaire d'un amplificateur inverseur 18b de même gain. Ce montage bouclé permet à l'organe détecteur de vibrer à sa fréquence propre. Le signal $V_M$ sert au surplus de référence de détection pour le montage de mesure qu'on décrira plus loin.

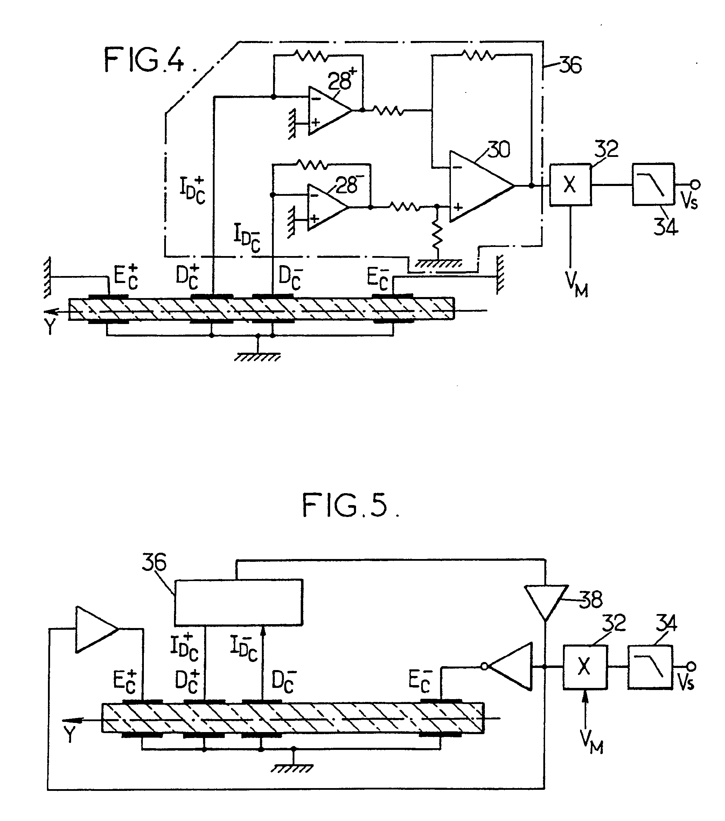

Dans le cas où le montage de mesure est en boucle ouverte, il peut avoir la constitution montrée en figure 4. Il comporte deux amplificateurs courant-tension 28- et 28+ qui reçoivent les courants fournis par les électrodes $D_C-$ et $D_C+$ et attaquent les deux entrées d'un amplificateur différentiel 30. Ce dernier fournit un signal sensiblement sinusoïdal en phase avec l'excitation, proportionnel à la vitesse de rotation $\Omega$ du détecteur puisque l'amplitude du champ moteur $U_M$ est rendue constante par l'asservissement. Le démodulateur 32 en extrait un signal de sortie qui est soumis à un filtrage passe bas en 34. On obtient ainsi une tension continue Vs proportionnelle à la vitesse $\Omega$ autour de l'axe sensible perpendiculaire à la plaque.

Dans le cas où le montage de mesure est en boucle fermée, il peut avoir la constitution montrée en figure 5 au lieu de celle de la figure 4. Dans ce cas le montage comporte encore un ensemble de deux amplificateurs courant-tension et d'un amplificateur différentiel. Cet ensemble, identique à celui montré en figure 4, est désigné par la référence 36.

Dans le cas de la figure 5, le signal de sortie de l'ensemble 36 est appliqué à un amplificateur 38 qui attaque le démodulateur 32 suivi du filtre passe bas 34 qui fournit une tension continue Vs proportionnelle à la vitesse $\Omega$ autour de l'axe sensible Z et qui constitue donc un signal de mesure de cette vitesse. Pour assurer un asservissement suivant l'axe de Coriolis, le signal de sortie de l'amplificateur 38 attaque également $E_C-$ et $E_C+$ (qui ne sont cette fois pas mises à la masse), par l'intermédiaire d'un inverseur en ce qui concerne $E_C-$. Grâce à ce bouclage, on ramène pratiquement à zéro les courants $I_{DC}+$ et $I_{DC}-$ et la vibration de la structure est inchangée lorsqu'un mouvement de rotation lui est imposé autour de l'axe Z.

Lorsque les deux faces portent des gravures symétriques, les liaisons entre elles peuvent être réalisées par des pistes métallisées. Dans le même cas, l'électronique peut être simplifiée par rapport à celle montrée en Figure 3 en croisant les liaisons, ce qui permet d'éviter les inversions de signaux : il suffit d'un seul amplificateur au lieu des deux amplificateurs 21+ et 21− ; l'amplificateur-inverseur 18b n'est plus nécessaire et le multiplicateur 20 n'a que deux entrées.

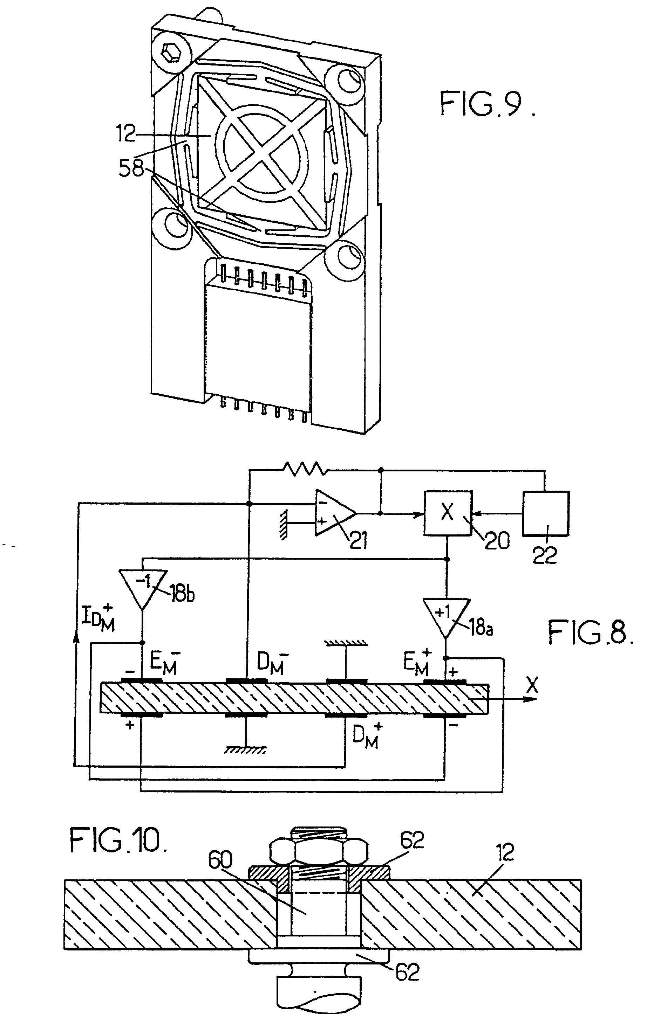

On peut également, dans le cas de gravure symétrique sur les deux faces, doubler l'amplitude des vibrations en alimentant chaque électrode motrice entre le plus et le moins de l'alimentation : le schéma électrique peut alors être celui de la figure 8, où les organes correspondant à ceux de la figure 3 sont désignés par le même numéro de référence.

Divers modes de fixation de la plaque 12 la laissant libre de vibrer sont utilisables.

Une solution classique consiste à la fixer rigidement à un support qui l'entoure en des emplacements correspondant à des noeuds de vibration du champ moteur $U_M$. Mais toute liaison a une dimension physique alors qu'un noeud est ponctuel et elle absorbe fatalement de l'énergie. Cet inconvénient est limité en reliant le bord de la plaque 10 de façon flottante à un support, à l'aide d'un matériau élastomère ou d'une structure métallique souple.

On donnera plus loin deux exemples concrets de suspension flottante, à titre non limitatif. Dans d'autres cas, on préférera utiliser des supports prenant appui sur la plaque en des points autres qu'à la périphérie, par exemple pour se rapprocher de noeuds.

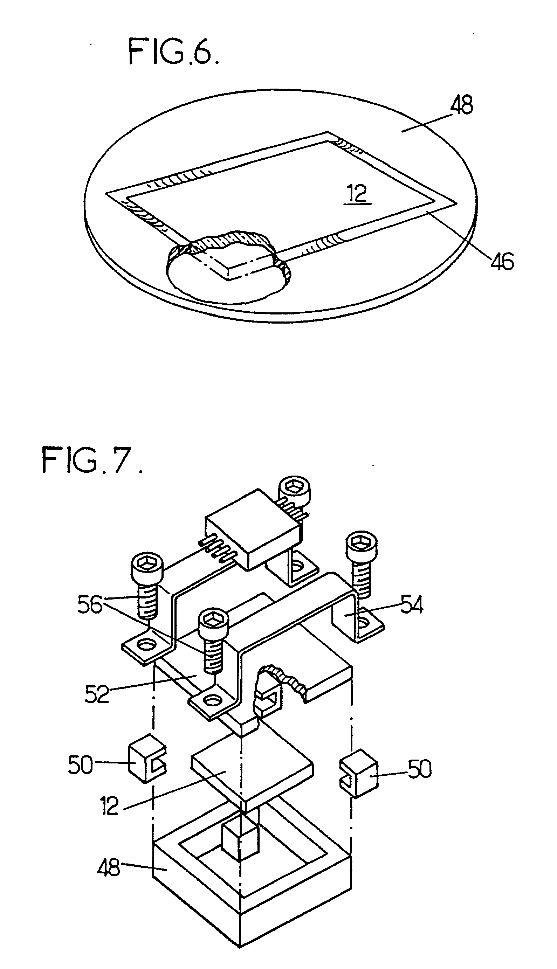

Dans le cas schématisé en figure 6, une bande 46 de matériau élastomère souple relie la plaque 12 à un support 48 sur la totalité de sa périphérie. Cette bande peut être fixée par collage ou directement surmoulée.

Dans le cas montré en figure 7 qui est un éclaté de l'organe détecteur, la plaque 12 est simplement tenue aux quatre coins, ce qui diminue les pertes d'énergie. Quatre pinces 50 en matériau élastomère sont chacune fixées au support 48 et elles enserrent chacune un coin de la plaque 12. Grâce à cette disposition, la plaque sensible 12 peut être maintenue sans être collée.

Le support 48 de la figure 6 ou 7 peut appartenir à un boîtier qui enferme la plaque 12 en la laissant libre de vibrer. Dans le cas illustré en figure 7, ce boîtier comporte un couvercle 52 et un plancher. L'ensemble peut être maintenu par des étriers 54 et des vis 56.

Pour améliorer la tenue de l'organe détecteur aux accélérations, des plaques de butée (non représentées) de matériau élastomère sont avantageusement fixées au couvercle et au plancher du boîtier, hors de contact avec la plaque 12 dans des conditions normales de fonctionnement. L'intervalle laissé entre chaque buté en élastomère et la plaque 12 est tel qu'en cas d'accélération dépassant un seuil déterminé cette dernière vient en appui contre l'élastomère en déformant la bande 46 ou les pinces 50. L'élastomère encaisse ainsi les déformations et amortit les chocs. La bande 46 ou les pinces 50 participent également, du fait de leur élasticité, à cet amortissement.

Lorsque la plaque est ainsi en butée, aucune mesure n'est plus possible. Mais les électrodes d'excitation du champ moteur peuvent continuer à être alimentées sans dommage pour le dispositif.

Dans une variante de réalisation, montrée en Figure 9, la plaque 12 est tenue au milieu des faces par des suspensions souples métalliques 58 sur un boîtier portant également les circuits électroniques. Dans une autre variante encore, montrée en Figure 10, la plaque est percée d'un trou central et fixée sur un goujon 60 lié au boîtier par pincement entre des rondelles 62. Une solution plus simple consiste à coller la plaque en son centre sur un pion fixé au boîtier.

De nombreuses autres variantes mécaniques et électriques sont possibles. Par exemple, on peut annuler le rendu de signal à vitesse de rotation nulle en fractionnant les électrodes de détection Dc en deux demi-électrodes affectées chacune d'un amplificateur dont l'un est à gain ajustable.

**Revendications**

1. Dispositif gyrométrique ayant un organe détecteur qui comprend une plaque (12) sensiblement plane présentant une symétrie par rapport à un axe sensible perpendiculaire à son plan, constituée au moins partiellement de matériau piézoélectrique et dont les deux grandes faces portent à la fois des électrodes (E) d'excitation de la plaque à la résonance réparties régulièrement autour de l'axe et des électrodes (D) de détection des vibrations de la plaque situées dans le même plan et placées de façon à détecter les contraintes provoquées par le champ moteur et par les forces de Coriolis lors de la rotation de la plaque autour de l'axe, caractérisé en ce que, la plaque sensiblement plane n'étant pas circulaire, cette plaque (12) et les électrodes (D) et (E) ont une symétrie de révolution d'ordre 4.

2. Dispositif gyrométrique ayant un organe détecteur qui comprend une plaque (12) sensiblement plane présentant une symétrie par rapport à un axe sensible perpendiculaire à son plan, constituée au moins partiellement de matériau piézoélectrique et dont les deux grandes faces portent à la fois des électrodes (E) d'excitation de la plaque à la résonance réparties régulièrement autour de l'axe et des électrodes (D) de détection des vibrations de la plaque situées dans le même plan et placées de façon à détecter les contraintes provoquées par le champ moteur et par les forces de Coriolis lors de la rotation de la plaque autour de l'axe, caractérisé en ce que la plaque 12 et les électrodes (D) et (E) ont une symétrie de révolution d'ordre 4 et en ce que les électrodes d'excitation sont alimentées de façon à exciter la vibration de la plaque de façon symétrique selon l'une des directions X, mais antisymétrique selon la direction perpendiculaire Y, de façon que les champs moteur et de Coriolis soient géométriquement décalés de 90° par rapport à l'axe Z..

3. Dispositif selon la revendication 1, caractérisé en ce que les électrodes d'excitation ($E_M$) sont alimentées de façon à exciter la vibration de la plaque de façon symétrique selon l'une des directions X, mais antisymétrique selon la direction perpendiculaire Y.

4. Dispositif selon la revendication 2 ou 3, caractérisé en ce que les électrodes d'excitation comprennent un couple de deux électrodes ($E_M$) disposées symétriquement par rapport à l'axe Y et centrées sur l'axe de symétrie X, alimentées par des tensions en opposition de phase à la fréquence propre de résonance de la plaque.

5. Dispositif selon la revendication 4, caractérisé en ce que les électrodes d'excitation comprennent un couple supplémentaire de deux électrodes ($E_C$) disposées symétriquement par rapport à l'axe X et centrées sur l'axe d'antisymétrie Y, appartenant à un circuit de contre réaction dont l'entrée est constituée par le signal fourni par les électrodes de détection des vibrations de la plaque provoquées par les forces de Coriolis.

6. Dispositif selon la revendication 4, caractérisé en ce que les électrodes d'excitation comprennent un couple supplémentaire de deux électrodes $E_C$ disposées symétriquement par rapport à l'axe X et centrées sur l'axe d'antisymétrie Y, reliées à la masse.

7. Dispositif selon la revendication 4, caractérisé en ce que les électrodes d'excitation comprennent un couple supplémentaire de deux électrodes ($E_C$) disposées symétriquement par rapport à l'axe X et centrées sur l'axe d'antisymétrie Y, éventuellement branchées en parallèle avec les électrodes de détection de Coriolis ($D_C$) pour augmenter le facteur d'échelle du dispositif.

8. Dispositif selon l'une quelconque des revendications précédentes, caractérisé en ce qu'il comporte un circuit d'excitation et de mesure ayant des moyens de détection de la différence des courants de sortie des électrodes ($D_M$) de détection des vibrations provoquées par le champ moteur et d'application, aux électrodes ($E_M$) d'excitation de la plaque, une tension destinée à maintenir la plaque à la résonance avec une amplitude de champ moteur constante.

9. Dispositif selon la revendication 8, caractérisé en ce que le circuit comprend des moyens de détection de la différence des courants recueillis par les électrodes ($D_C$) de détection des vibrations provoquées par les forces de Coriolis et des moyens de démodulation (32) et de filtrage (34).

10. Dispositif gyrométrique selon l'une quelconque des revendications précédentes, caractérisé en ce que la plaque (12) de l'organe détecteur (10) est montée flottante dans un boîtier par l'intermédiaire d'une suspension souple.

11. Dispositif gyrométrique selon la revendication 10, caractérisé en ce qu'il comprend un boîtier muni de plaques de butée internes séparées de la plaque (12) par un intervalle suffisamment faible pour que la plaque (12) vienne en appui contre l'une des plaques de butée lorsque le dispositif est soumis à une accélération dont la composante suivant l'axe sensible dépasse un seuil déterminé.

**Patentansprüche**

1. Gyrometrische Vorrichtung mit einem Detektor, der eine genau ebene, zu einer zu ihrer Ebene genau senkrechten Achse symmetrische Platte aufweist, die wenigstens bereichsweise aus piezoelektrischem Material besteht und deren zwei große Stirnflächen zugleich regelmäßig um die Achse verteilte Elektroden (E) zur Erregung der Platte mit ihrer Resonanzschwingung und Elektroden (D) zum Empfangen von Schwingungen der Platte trägt, welche in derselben Ebene angeordnet und zum Empfangen von Spannungen vorgesehen sind, die durch das Antriebsfeld und die Coriolis-Kräfte während der Rotation der Platte um ihre Achse hervorgerufen werden, dadurch gekennzeichnet, daß die genau ebene Platte nicht kreisförmig ist, wobei die Platte (12) und die Elektroden (D) und (E) eine Drehsymmetrie vierter Ordnung aufweisen.

2. Gyrometrische Vorrichtung mit einem Detektor, der eine genau ebene, zu einer zu ihrer Ebene genau senkrechten Achse symmetrische Platte (12) aufweist, die wenigstens bereichsweise aus piezoelektrischem Material besteht und deren zwei große Stirnflächen zugleich regelmäßig um die Achse verteilte Elektroden (E) zur Erregung der Platte mit ihrer Resonanzschwingung und Elektroden (D) zum Empfangen von Schwingungen der Platte trägt, die in derselben Ebene angeordnet und zum Empfangen von Spannungen vorgesehen sind, die durch das Antriebsfeld oder die Coriolis-Kräfte während der Rotation der Platte um ihre Achse hervorgerufen werden, dadurch gekennzeichnet, daß die Platte (12) und die Elektroden (D) und (E) eine Drehsymmetrie vierter Ordnung aufweisen und daß die Erregungselektroden derart gespeist sind, daß die Schwingung der Platte symmetrisch zu einer Richtung X, aber antisymmetrisch zu einer rechtwinkligen Richtung Y hervorgerufen wird und daß das Antriebsfeld und die Coriolis-Kräfte um 90° im Verhältnis zur Achse Z geometrisch geneigt sind.

3. Vorrichtung nach Anspruch 1, dadurch gekennzeichnet, daß die Erregungselektroden ($E_M$) derart gespeist sind, daß die Schwingung der Platte symmetrisch zu einer Richtung X, aber antisymmetrisch zu einer rechtwinkligen Richtung Y hervorge-

rufen wird.

4. Vorrichtung nach Anspruch 2 oder 3, dadurch gekennzeichnet, daß die Erregungselektroden ein Paar von zwei Elektroden ($E_M$) aufweisen, die symmetrisch im Verhältnis zur Achse Y angeordnet und auf der Symmetrieachse X zentriert sind, wobei sie durch die Spannungen im Gegensatz zur zur Resonanzfrequenz der Platte geeigneten Phase gespeist sind.

5. Vorrichtung nach Anspruch 4, dadurch gekennzeichnet, daß die Erregungselektroden ein zusätzliches Paar von zwei Elektroden ($E_C$) aufweisen, die symmetrisch im Verhältnis zur Achse X angeordnet und auf der Antisymmetrieachse Y zentriert sind, wobei sie zu einer Gegenreaktionsschaltung gehören, deren Eingang von einem Signal gebildet ist, das durch die Elektroden zum Empfang der durch die Coriolis-Kräfte hervorgerufenen Schwingungen der Platte geliefert wird.

6. Vorrichtung nach Anspruch 4, dadurch gekennzeichnet, daß die Erregungselektroden ein zusätzliches Paar von zwei Elektroden ($E_C$) aufweisen, die im Verhältnis zur Achse X symmetrisch angeordnet und auf der Antisymmetrieachse Y zentriert sind, wobei sie mit der Masse verbunden sind.

7. Vorrichtung nach Anspruch 4, dadurch gekennzeichnet, daß die Erregungselektroden ein zusätzliches Paar von zwei Elektroden ($E_C$) aufweisen, die im Verhältnis zur Achse X symmetrisch angeordnet und auf der Antisymmetrieachse Y zentriert sind, wobei sie gegebenenfalls parallel mit den Elektroden zum Empfang der Coriolis-Kräfte ($D_C$) zur Steigerung des Verstärkungsfaktors der Vorrichtung geschaltet sind.

8. Vorrichtung nach einem der vorangehenden Ansprüche, dadurch gekennzeichnet, daß diese eine Schaltung zur Erregung und zur Messung, welche Mittel zum Empfangen der Differenz der Ausgangsströme der Elektroden ($D_M$) zum Empfang der durch das Antriebsfeld hervorgerufenen Schwingungen und Mittel zur Anwendung einer Spannung auf die Elektroden ($E_M$) zur Erregung der Platte aufweist, welche zur Aufrechterhaltung der Platte mit ihrer Resonanzschwingung mit einer konstanten Amplitude des Antriebsfeldes dient.

9. Vorrichtung nach Anspruch 8, dadurch gekennzeichnet, daß die Schaltung Mittel zum Empfangen der Differenz der von den Elektroden ($D_C$) zum Empfang von durch die Coriolis-Kräfte hervorgerufenen Schwingungen und Mittel zur Demodulation (32) und zur Filtration (34) aufweist.

10. Gyrometrische Vorrichtung nach einem der vorangehenden Ansprüche, dadurch gekennzeichnet, daß die Platte (12) des Detektors (10) durch Zwischenschaltung einer geschmeidigen Suspension schwimmend in einem Gehäuse angeordnet ist.

11. Gyrometrische Vorrichtung nach Anspruch 10, dadurch gekennzeichnet, daß diese ein Gehäuse aufweist, das mit inneren Anschlagsplatten versehen ist, welche von der Platte (12) durch einen ausreichend geringen Abstand getrennt sind, damit die Platte (12) sich gegen die Anschlagsplatten abstützt, wenn die Vorrichtung einer Beschleunigung unterzogen ist, deren genau der Achse folgende Komponente einen bestimmten Wert überschreitet.

**Claims**

1. A rate gyroscope having a sensing element comprising a substantially plane wafer (12) symmetrical of a sensitive axis perpendicular to the wafer plane, the wafer being embodied at least to some extent by a piezoelectric substance, the two major faces of the wafer carrying electrodes (E) for exciting the wafer at resonance, the electrodes being regularly distributed around the axis, the two major faces also carrying electrodes (D) for detecting vibrations of the wafer, the latter electrodes being disposed in the same plane and being positioned to detect the stresses produced by the driving field and by the Coriolis forces upon rotation of the wafer around the axis, characterised in that, the substantially plane wafer being other than circular, such wafer (12) and the electrodes (D) and (E) have a fourth order symmetry of revolution.

2. A rate gyroscope having a sensing element comprising a substantially plane wafer (12) symmetrical of an axis substantially perpendicular to the wafer plane, the wafer being embodied at least to some extent by a piezoelectric substance, the two major faces of the wafer carrying electrodes (E) for exciting the wafer at resonance, the electrodes being regularly distributed around the axis, the two major faces also carrying electrodes (D) for detecting vibrations of the wafer, the latter electrodes being disposed in the same plane and being positioned to detect the stresses produced by the driving field and by the Coriolis forces upon rotation of the wafer around the axis, characterised in that the wafer (12) and the electrodes (D) and (E) have a fourth order symmetry of revolution and the exciting electrodes are energised to force the wafer to vibrate symmetrically in one, X, of the directions but antisymmetrically in the perpendicular direction Y so that the driving and Coriolis fields are geometrically offset by 90° relatively to the axis Z.

3. A rate gyroscope according to claim 1, characterised in that the exciting electrodes ($E_M$) are energised to make the wafer vibrate symmetrically in one, X, of the directions but antisymmetrically in the perpendicular direction Y.

4. A rate gyroscope according to claim 2 or 3, characterised in that the exciting electrodes comprise a pair of electrodes ($E_M$) disposed symmetrically of the axis Y and centred on the axis X of symmetry and energised by voltages of opposed phase to one another at the natural resonant frequency of the wafer.

5. A rate gyroscope according to claim 4, characterised in that the exciting electrodes comprise a supplementary pair of electrodes ($E_C$) disposed symmetrically of the axis X and centred on the axis Y of antisymmetry and forming part of a negative feedback circuit whose input is the signal delivered by the electrodes detecting the Coriolis-force-induced vibrations of the wafer.

6. A rate gyroscope according to claim 4, characterised in that the exciting electrodes comprise an additional pair of electrodes ($E_C$) which are earthed and which are disposed symmetrically of the axis X and which are centred on the antisymmetry axis Y.

7. A rate gyroscope according to claim 4, characterised in that the exciting electrodes comprise an additional pair of electrodes ($E_C$) which are disposed symmetrically of the axis X and centred on the antisymmetry axis Y and possibly connected in parallel with the Coriolis detection electrodes ($D_C$) to increase the scale factor of the device.

8. A rate gyroscope according to any of the previous claims, characterised in that it comprises an exciting and measuring circuit having means for detecting the difference between the output currents of the electrodes ($D_M$), for detecting the vibrations produced by the driving field and for applying to the waferexciting electrodes ($E_M$) a voltage for maintaining the wafer in resonance with a constant-amplitude driving field.

9. A rate gyroscope according to claim 8, characterised in that the circuit comprises means for detecting the difference between the currents collected by the electrodes ($D_C$), for detecting the vibrations produced by the Coriolis forces, demodulation means (32) and filter means (34).

10. A rate gyroscope according to any of the previous claims, characterised in that the wafer (12) of the sensing element (10) is floatingly mounted in a casing with the interposition of a flexible suspension.

11. A rate gyroscope according to claim 10, characterised in that it comprises a casing having internal stop plates separated from the wafter (12) by a gap small enough for the wafer (12) to bear on one of the stop plates when the rate gyroscope experiences an acceleration whose component along the sensitive axis exceeds a predetermined threshold.

# FIG.1.

# FIG.2.

# FIG.3.

FIG.4.

FIG.5.

FIG.6.

48

12

46

FIG.7.

56

54

52

50

50

12

48

FIG.9 .

12

58

FIG.8.

$ID_M^+$

18b $-1$

$E_M^-$

$D_M^-$

$E_M^+$

+1 18a

$D_M^+$

X

21

X 20

22

FIG.10.

60

62

12

62